Europäisches Patentamt

European Patent Office

Office européen des brevets

(11) Numéro de publication: **0 156 703**

**A1**

## (12) DEMANDE DE BREVET EUROPEEN

(21) Numéro de dépôt: **85400406.6**

(22) Date de dépôt: **04.03.85**

(51) Int. Cl.⁴: **F 23 C 11/02**
**F 22 B 31/00, B 01 J 8/32**
**F 28 D 13/00**

(30) Priorité: **08.03.84 FR 8403580**

(43) Date de publication de la demande:
**02.10.85 Bulletin 85/40**

(84) Etats contractants désignés:
**AT BE DE FR GB IT SE**

(71) Demandeur: **FRAMATOME ET CIE.**
**Tour Fiat 1, Place de la Coupole**
**F-92400 Courbevoie(FR)**

(72) Inventeur: **Marcellin, Michel**
**2 rue Mazenay Résidence Guynemer - Appt. 35**
**F-71200 - Le Creusot(FR)**

(74) Mandataire: **Bressand, Georges et al,**
**c/o CABINET LAVOIX 2 Place d'Estienne d'Orves**
**F-75441 Paris Cedex 09(FR)**

(54) **Procédé et appareillage de contrôle du transfert thermique réalisé dans un lit fluidisé.**

(57) L'invention a pour objet un procédé et un appareillage de contrôle du transfert thermique entre un lit circulant de particules solides et un échangeur de chaleur (6) place à l'intérieur d'une enceinte (1) de fluidisation alimentée en particules solides et reliée à un dispositif de récupération (4) et de recyclage (5) des particules dans le lit fluidisé.

On adapte à chaque instant le coefficient d'échange thermique de l'échangeur (6) aux besoins de transfert thermique de l'installation par variation dans le même sens de la concentration de particules solides dans le lit circulant, en augmentant ou diminuant la quantité de particules en circulation pour, respectivement, augmenter ou diminuer le coefficient d'échange jusqu'à la valeur nécessaire aux besoins.

L'invention s'applique spécialement aux chaudières de production de vapeur fonctionnant au charbon.

Fig 1

# Procédé et appareillage de contrôle du transfert thermique réalisé dans un lit fluidisé

L'invention a pour objet un procédé et un appareillage de contrôle du transfert thermique réalisé entre un lit fluidisé circulant de particules solides ménagé . dans une enceinte et un fluide caloporteur circulant dans un échangeur de chaleur placé à l'intérieur de l'enceinte. L'invention s'applique spécialement au réglage d'une chaudière de production de vapeur.

On sait qu'un lit fluidisé de particules solides présente l'avantage de réaliser un excellent transfert thermique entre des particules mises en fluidisation et un fluide caloporteur circulant dans un échangeur placé dans le lit fluidisé. Ce dernier est réalisé à l'intérieur d'une enceinte alimentée en particules solides et munie à sa base de moyens de fluidisation des particules par circulation d'un courant ascendant de gaz à une vitesse réglable. Le gaz s'échappe à la partie supérieure de l'enceinte par un circuit d'évacuation qui passe dans un dispositif de récupération des particules de granulométrie assez fine pour être entrainées avec les gaz compte tenu de la vitesse de ceux-ci. En particulier, si la vitesse de fluidisation dépasse une vitesse limite de l'ordre de 2 m/seconde, le lit fluidisé fonctionne en régime dit circulant. En effet, une proportion importante de particules solides est entrainée avec les gaz et l'on distingue à l'intérieur de l'enceinte une phase dense, à forte concentration en particules fluidisées et une phase diluée contenant une quantité plus faible mais qui reste appréciable de particules solides. Celles-ci sont récupérées dans un séparateur qui est relié à la base du lit fluidisé par un circuit de recyclage. On a donc une circulation permanente de particules fines entre l'enceinte à lit fluidisé et le dispositif de récupération.

Les lits fluidisés sont utilisés notamment pour la combustion de matières combustibles solides, le fonctionnement en lit circulant permettant notamment d'assurer une combustion complète puisque les particules fines incomplètement brulées et entrainées avec les fumées sont recyclées dans le lit fluidisé. C'est le cas en particulier des chaudières de production de vapeur comportant une chambre de chauffe en lit fluidisé alimentée en matière combustible sous forme de particules solides et en gaz comburant constituant généralement le gaz de fluidisation et dans laquelle est placé un échangeur de chaleur parcouru par de l'eau pour la production de vapeur. Dans les chaudières classiques, lorsque le besoin de vapeur varie, on fait varier en conséquence l'alimentation en combustible et en comburant de

**0156703**

façon à adapter la production de chaleur au besoin de vapeur. Lorsque le combustible est un hydrocarbure liquide ou gazeux, l'adaptation peut se faire rapidement et avec souplesse, mais il n'en est pas de même lorsque l'on utilise un combustible solide comme du charbon, la chaudière présentant alors une inertie beaucoup plus grande. En outre, alors que l'on peut régler à volonté l'alimentation en combustible liquide ou gazeux, et par conséquent la température produite, celle-ci ne peut pas être réglée facilement lorsque le combustible est solide. En effet, si la température est trop élevée, on dépasse la température de fusion des cendres, ce qui présente des inconvénients connus, et si la température est trop basse, par exemple en dessous de 600°C, le charbon risque de s'éteindre.

L'invention a pour objet de remédier à ces inconvénients en apportant à l'installation une souplesse de fonctionnement qui n'existait pas jusqu'à présent et en permettant, même avec un combustible solide, de contrôler le transfert thermique de façon à s'adapter aux besoins et en particulier, dans une chaudière, de produire de la vapeur avec un débit et à la pression souhaitée.

Conformément à l'invention, on adapte à chaque instant le coefficient d'échange thermique de l'échangeur aux besoins de transfert thermique de l'installation par variation dans le même sens de la concentration de particules solides dans le lit circulant en augmentant ou diminuant la quantité de particules en circulation pour, respectivement, augmenter ou diminuer le coefficient d'échange jusqu'à la valeur nécessaire aux besoins.

Pour augmenter la concentration en particules du lit circulant, dans un mode de réalisation préférentiel, on introduit dans le circuit de recyclage un débit contrôlé de particules inertes de granulométrie assez fine pour qu'elles soient entraînées avec les gaz. A l'inverse, on diminue la concentration du lit circulant en soutirant un débit contrôlé de particules du circuit de recyclage.

Lorsque la matière à traiter est soumise dans le lit fluidisé à une réaction produisant des résidus fins, comme c'est par exemple le cas pour la combustion d'un combustible solide, on fait varier le débit de soutirage des résidus en sens inverse de la variation souhaitée du coefficient d'échange thermique pour maintenir dans le lit fluidisé la concentration en particules fines déterminant un coefficient d'échange correspondant aux besoins de transfert thermique.

L'invention est particulièrement adaptée au contrôle de la production de vapeur dans une chaudière à lit fluidisé. Dans ce cas en effet, la chaudière peut être associée à un dispositif de régulation permettant de contrôler l'alimentation en combustible et en comburant en fonction de la pression de vapeur pour amener celle-ci à la valeur souhaitée. Selon l'invention, la chaudière à lit fluidisé est associée à un dispositif d'alimentation en particules inertes à débit variable et à un dispositif de soutirage à débit variable des particules recyclées et le dispositif de régulation commande une augmentation du débit d'alimentation en particules inertes ou une augmentation du débit de soutirage pour déterminer, respectivement, une augmentation ou une diminution de la pression de vapeur.

Mais l'invention sera mieux comprise par la description qui va suivre d'un mode de réalisation particulier et d'une variante donnés à titre d'exemple et représentés sur les dessins annexés.

La figure 1 est un schéma général d'une installation de production de vapeur perfectionnée selon l'invention.

La figure 2 est un schéma d'une installation simplifiée.

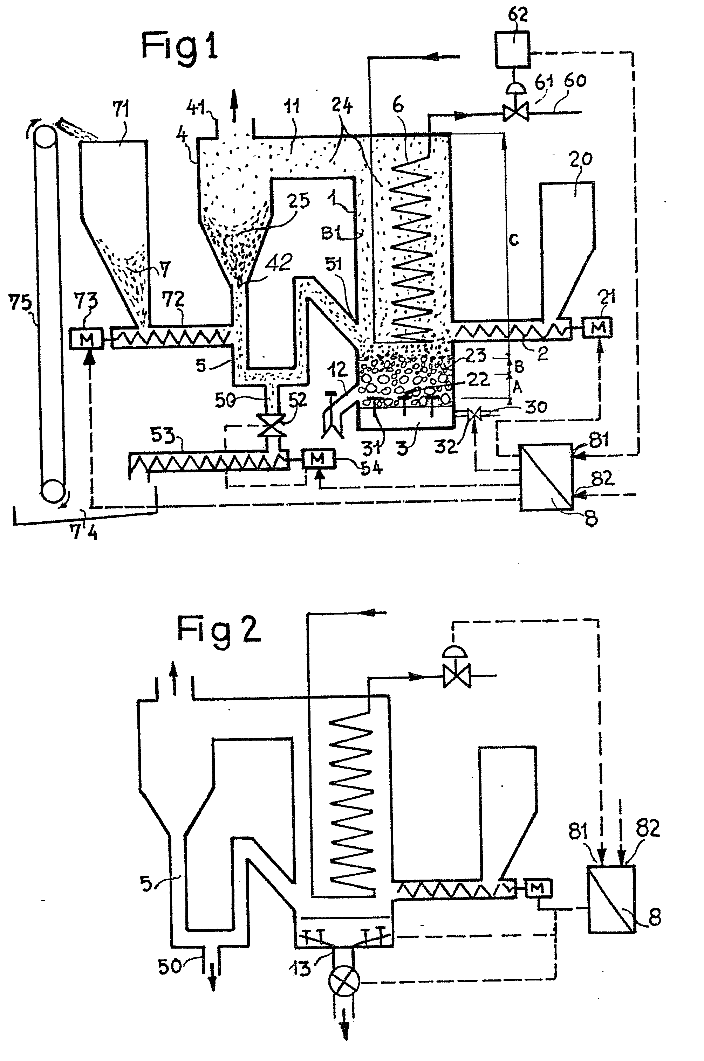

Sur la figure 1, on a représenté schématiquement l'ensemble d'une installation de production de vapeur comportant une chaudière 1 constituée d'une enceinte cylindrique verticale alimentée en matière combustible, telle que du charbon stocké dans une trémie 20, par l'intermédiaire d'un dispositif d'alimentation 2 constitué par exemple par une vis entrainée par un moteur 21.

L'enceinte 1 est munie à sa base de moyens de fluidisation des particules solides introduites par le dispositif 2 et constituée par exemple par un plenum 3 placé à la base de l'enceinte, débouchant à l'intérieur de celle-ci par l'intermédiaire d'une pluralité de diffuseurs 31 et relié à une conduite d'alimentation en gaz 30 munie d'un organe de réglage du débit 32.

A sa partie supérieure, l'enceinte 1 est reliée par une conduite 11 d'évacuation des gaz à un dispositif de séparation 4 constitué par exemple d'un séparateur mécanique du genre cyclône comportant une sortie supérieure 41 des gaz et une sortie inférieure 42 des particules solides récupérées reliée à la base de l'enceinte 1 par un circuit de recyclage 5 constitué par exemple par une conduite en forme de siphon débouchant en 51 dans l'enceinte 1.

Le combustible introduit par le dispositif d'alimentation 2 comporte des particules de différentes tailles même si la granulométrie est relativement homogène. Selon la vitesse de circulation des gaz dans l'enceinte 1, on peut distinguer à l'intérieur de celle-ci plusieurs zones superposées. Tout d'abord, immédiatement au-dessus des diffuseurs 31, peut se trouver une zone A constituée par un lit fixe de matériaux trop volumineux pour être soulevés par les gaz, comme par exemple des cendres agglomérées. Celles-ci peuvent être évacuées périodiquement par une purge 12.

Au-dessus du lit fixe A qui peut d'ailleurs ne pas exister, se trouve une zone en phase dense B comportant d'une part des particules susceptibles d'être mises en suspension par le courant de gaz mais trop lourdes pour être entrainées par celui-ci et d'autre part de particules fines entrainées par les gaz et qui traversent la zone B avant d'être entrainées dans la partie supérieure de l'enceinte. La concentration en particules dans la zone B est donc importante, la porosité, c'est la proportion de vide par unité de volume, pouvant être de 0,5.

Toute la partie supérieure de l'enceinte 1 constitue une zone C en phase diluée, c'est à dire contenant une certaine proportion de particules solides assez fines pour être entrainées avec les gaz, la porosité pouvant être par exemple de 0,95. Celle-ci dépend de la vitesse de circulation des gaz étant donné qu'en dessous d'une vitesse limite, seule une faible quantité de particules extrêmement fines est entrainée avec les gaz. On sait que cette vitesse limite est de l'ordre de 2 m/s et que c'est à partir de cette vitesse que le lit fluidisé fonctionne en régime dit circulant. En effet, les particules entrainées avec les gaz sont récupérées dans le séparateur 4 et s'accumulent à la base de celui-ci puis sont recyclées dans le lit fluidisé par la conduite de recyclage 5, celle-ci ayant la forme d'un siphon. De la sorte, les particules fines peuvent circuler plusieurs fois dans le lit fluidisé jusqu'à combustion complète du carbone qu'elles contiennent. Périodiquement, les cendres qui s'accumulent ainsi peuvent être évacuées soit par la purge 12, soit par une conduite de soutirage $5_0$ placée sur le circuit de recyclage 5 et munie d'une vanne 52.

A l'intérieur de l'enceinte 1 est placée un faisceau 6 de tube de circulation d'un fluide caloporteur constituant un échangeur de chaleur. Lorsque l'installation est une chaudière, le fluide caloporteur est de l'eau qui est vaporisée à l'intérieur de l'enceinte 1 et alimente en vapeur un circuit d'utilisation 60.

Dans certains cas, pour augmenter la quantité de chaleur absorbée par l'eau, on fait passer celle-ci dans des tubes traversant directement la zone dense B du lit fluidisé. Cependant, les particules combustibles étant abrasives, ces tubes s'usent rapidement. C'est pourquoi, généralement, l'échangeur 6 est placé à l'intérieur de la phase diluée C du lit fluidisé.

Jusqu'à présent, on ne savait pas faire varier le coefficient d'échange thermique et par conséquent, pour adapter le transfert thermique aux besoins, on pouvait agir seulement sur l'alimentation en combustible et en comburant. Par exemple, si le besoin en vapeur augmente, on peut augmenter la température du lit fluidisé en augmentant le débit d'alimentation en combustible par le dispositif 2 et en gaz comburant par la conduite d'alimentation 30. Cependant, la température dans la zone diluée C n'augmente pas en proportion et, d'autre part, il n'est pas souhaitable de dépasser la température de fusion des cendres.

Comme on l'a vu, si le besoin en vapeur diminue, il est encore plus difficile de diminuer le transfert thermique en jouant sur la température du lit fluidisé car en baissant trop celle-ci, le charbon risquerait de s'éteindre.

Selon l'invention, on obtient au contraire une excellente souplesse de fonctionnement en introduisant dans le lit fluidisé un débit contrôlé de particules inertes 7 stockées dans une trémie 71 et introduites dans le lit fluidisé par un dispositif d'alimentation 72 constitué par exemple par une vis entrainée par un moteur 73. Pour diminuer les risques de perturbation du lit fluidisé par introduction de particules froides, le dispositif d'alimentation 72 débouche de préférence dans le circuit de recyclage 5 de façon que les particules inertes 7 se réchauffent au contact des particules récupérées 25 avant d'être réintroduites en 51 dans le lit fluidisé.

En introduisant ainsi dans le lit fluidisé un débit contrôlé de particules inertes assez fines pour être entrainées avec les gaz, on augmente la concentration de la phase diluée C et par conséquent la quantité de chaleur qui peut être absorbée par l'eau circulant dans l'échangeur 6. En effet, le coefficient d'échange global est proportionnel à la porosité de la phase diluée. Dans le même temps, on augmente le débit de combustible introduit par le dispositif 2 ainsi que de l'air de fluidisation introduit par la conduite 30 afin de conserver un excès d'air correct pour une bonne combustion. Ceci entraîne une augmentation de la vitesse de fluidisation, ce qui va également dans le sens d'un accroissement du coefficient d'échange. Les particules inertes 7 introduites dans le circuit sont ainsi chauffées et transmettent la chaleur absorbée à l'échangeur 6.

En augmentant la concentration des particules, on augmente également la hauteur de la zone dense B qui peut arriver jusqu'à un niveau $B_1$ par exemple. Ainsi, la partie inférieure de l'échangeur peut être placée à l'intérieur de la zone dense du lit fluidisé dans laquelle le transfert thermique est plus important puisque la concentration en particules chaudes est plus grande. Pour diminuer les risques d'abrasion, l'échangeur fixe peut avoir la forme d'un fourreau cylindrique parallèle à la paroi de l'enceinte 1 de façon à ne pas s'opposer à la circulation ascendante des gaz ou être constitué d'une paroi membranée. D'autre part, le fonctionnement de l'installation peut être réglé de façon que, pour une production de vapeur normale, l'échangeur 6 soit placée uniquement dans la zone diluée C, la partie inférieure ne se trouvant dans la zone dense B, et sur une hauteur variable, que dans les cas où le besoin de vapeur augmente.

Lorsque la production de vapeur doit revenir à la normale, on arrête l'alimentation en particules inertes 7 et l'on ramène la concentration en particules à la valeur normale en soutirant la quantité excédentaire de particules par la conduite de soutirage 50 qui débouche dans un dispositif d'extraction 53 constitué par exemple d'une vis entrainée en rotation par un moteur 54 à l'intérieur d'un fourreau dans lequel se produit un refroidissement des particules. Celles-ci débouchent dans une trémie 74 d'où elles sont reprises, par exemple par un élévateur à godet 75 pour être réintroduites dans la trémie de stockage 71.

Si le besoin de vapeur diminue, on peut encore diminuer la concentration de particules solides et par conséquent le coefficient d'échange thermique en soutirant un débit supplémentaire de particules par la conduite 50.

On dispose ainsi d'un moyen d'augmenter ou de diminuer le coefficient d'échange thermique avec une assez grande précision et par conséquent d'adapter en permanence le transfert thermique aux besoins de l'installation à chaque instant.

Il est d'ailleurs possible d'effectuer une régulation automatique du processus qui vient d'être décrit. A cet effet, la pression de vapeur mesurée en 61 sur le circuit d'utilisation 60 peut être transformée par un dispositif 62 en un signal proportionnel qui est affiché à l'entrée 81 d'un dispositif de régulation 8 recevant sur son autre entrée 82 un signal proportionnel à la pression desirée. Le dispositif de régulation 8 effectue la comparaison de la pression mesurée avec la pression souhaitée, calcule les différents paramètres de l'installation et envoie des signaux de commande correspondants au moteur 21 et à la vanne 32 pour régler l'alimentation en combustible et en comburant mais également au moteur 73 du dispositif d'alimentation 72 en particules inertes ou bien au moteur 54 du dispositif de soutirage 53. De la sorte, on peut agir sur le coefficient d'échange thermique en même temps que sur l'alimentation en combustible et en comburant pour amener la pression de vapeur à la valeur voulue et la maintenir à cette valeur.

Bien entendu, l'invention ne se limite pas aux détails du mode de réalisation qui vient d'être décrit, d'autres moyens équivalents pouvant être employés pour assurer les mêmes fonctions. En outre, dans certains cas, l'installation pourrait être simplifiée comme on l'a représentée sur la figure 2. En effet, dans le cas d'un charbon cendreux, par exemple ayant un taux de cendres supérieur à 30 %, il pourrait être suffisant d'agir sur le débit d'extraction de cendres par un dispositif de soutirage 13 placé à la base du foyer de façon à moduler la marche de la chaudière. Les cendres pourraient d'ailleurs être évacuées parallèlement par le dispositif 13 de soutirage du lit fluidisé et par un dispositif de soutirage 50 placé sur le circuit de recyclage 5 des cendres récupérées.

Normalement, le débit de soutirage des cendres est réglé de façon à maintenir la phase dense à un niveau sensiblement constant. En diminuant le débit de soutirage, l'accumulation de cendres remplace l'introduction de matériaux inertes décrite précédemment et permet donc d'augmenter le coefficient d'échange thermique. En revanche, dès que la quantité de chaleur à fournir diminue, on extrait, au moyen du dispositif de purge 13 et éventuellement du dispositif de soutirage 50 la quantité de cendres nécessaires pour retrouver la situation initiale ou même diminuer encore la concentration en particules solides.

Dans tous les cas, il peut être utile de connaître la hauteur de la phase dense. A cet effet, des prises de pression différentielles peuvent être réparties le long de la colonne fluidisé dans l'enceinte verticale 1, leurs informations étant transmises au dispositif de régulation 8.

Pour plus de précision, l'invention a été décrite dans le cas d'une chaudière, mais elle pourra être utilisée avantageusement chaque fois que l'on réalise un transfert thermique dans un lit fluidisé de particules, dans le cas de réactions qui doivent être réalisées à une température sensiblement constante, comme par exemple des réactions de calcination de minerais (grillage de pyrites ou calcination d'alumine) ou bien pour la gazéification à l'air de biomasse ou le traitement de liqueurs noires de papeterie.

0156703

1

<u>REVENDICATIONS</u>

1.- Procédé de contrôle du transfert thermique entre un lit circulant de particules solides et un échangeur de chaleur (6) placé à l'intérieur d'une enceinte (1) alimentée en particules solides, munie à sa base de moyens (3) de fluidisation des particules par circulation d'un courant ascendant de gaz à une vitesse réglable et reliée à un dispositif de récupération (4) des particules de granulométrie assez fine pour être entraînées avec les gaz compte tenu de la vitesse de ceux-ci, au moins une partie des particules récupérées étant réintroduite dans le lit fluidisé par un circuit (5) de recyclage, procédé dans lequel on adapte à chaque instant le coefficient d'échange thermique de l'échangeur (6) aux besoins de transfert thermique de l'installation par variation dans le même sens de la concentration de particules solides dans le lit circulant,
caractérisé par le fait que l'on augmente la concentration en particules du lit circulant en introduisant dans le circuit (5) de recyclage un débit contrôlé de particules inertes de granulométrie assez fine pour qu'elles soient entraînées avec les gaz et que l'on diminue la concentration du lit circulant en soutirant un débit contrôlé de particules du circuit de recyclage.

2.- Procédé de contrôle selon la revendication 1, dans lequel la matière à traiter est soumise dans le lit fluidisé à une réaction produisant des résidus fins qui sont entraînés avec les gaz et retirés du circuit de recyclage par un dispositif (50) de soutirage à débit variable,
caractérisé par le fait que l'on fait varier le débit de soutirage des résidus en sens inverse de la variation souhaitée du coefficient d'échange thermique pour maintenir dans le lit fluidisé la concentration voulue en particules fines.

3.- Appareillage de contrôle du transfert thermique réalisé entre un lit fluidisé circulant de particules solides et un fluide caloporteur circulant dans un échangeur de chaleur (6) placé à l'intérieur d'une enceinte (1) alimentée en particules solides et munie à sa base de moyens (3) d'insufflation d'un courant ascendant de gaz de fluidisation, le lit fluidisé comprenant une phase dense (B) à forte concentration en particules et une phase diluée (C) contenant des particules fines entraînées avec les gaz s'échappant à la partie supérieure de l'enceinte (1) vers un dispositif de séparation (4) relié à la base de l'enceinte par un circuit (5) de recyclage dans le lit fluidisé des particules récupérées, et comprenant des moyens (7) de réglage de la concentration en particules solides de la phase diluée (C) et de la hauteur de la phase dense (B), caractérisé par le fait que les moyens (7) de réglage de la concentration en particules solides comprennent une trémie (71) de stockage de particules inertes reliée par un moyen (72) d'alimentation à débit variable au circuit (5) de recyclage des particules récupérées, ce dernier étant muni d'un dispositif (50) de soutirage des particules à débit variable et associé à un dispositif (8) de régulation des débits d'alimentation et de soutirage en fonction du besoin de transfert thermique, répondant à une variation du besoin de transfert thermique par une variation dans le même sens du débit d'alimentation en particules inertes et/ou par une variation en sens inverse du débit de soutirage.

4.- Installation de production de vapeur comprenant une chaudière en lit fluidisé, constituée

d'une enceinte (1) alimentée en matière combustible
sous forme de particules solides, dans laquelle est
placée un échangeur de chaleur (6) parcouru par de
l'eau, et munie de moyens (3) de fluidisation des
particules solides par circulation d'un courant ascendant de gaz comburant dont la vitesse est réglée de
façon à fonctionner en lit circulant, des particules
fines étant entraînées avec les gaz, récupérées dans
un dispositif de séparation et recyclées dans le lit
fluidisé, la chaudière (1) étant associée à un dispositif (8) de régulation de l'alimentation en combustible et en comburant en fonction de la pression de vapeur, caractérisée par le fait qu'elle comprend un
dispositif (7) d'introduction dans le lit fluidisé de
particules inertes avec un débit variable et un dispositif (50) de soutirage à débit variable de particules
sur le circuit de recyclage (5) et que le dispositif
de régulation (8) commande une augmentation du débit
d'alimentation en particules inertes ou une augmentation du débit de soutirage pour répondre, respectivement, à une augmentation ou une diminution de la pression de vapeur souhaitée.

Fig 1

Fig 2

0156703

1/1

Office européen
des brevets

RAPPORT DE RECHERCHE EUROPEENNE

**0156703**
Numéro de la demande

EP  85 40 0406

## DOCUMENTS CONSIDERES COMME PERTINENTS

| Catégorie | Citation du document avec indication, en cas de besoin, des parties pertinentes | Revendication concernee | CLASSEMENT DE LA DEMANDE (Int Cl 4) |
|---|---|---|---|
| Y | FR-A-2 323 101 (METALLGESELLSCHAFT) * Page 1, ligne 35 - page 2, ligne 27; page 6, ligne 32 - page 7, ligne 24; page 9, lignes 4-27; page 11, ligne 12 - page 12, ligne 21; figure 1 * | 1,3 | F 23 C 11/02 F 22 B 31/00 B 01 J 8/32 F 28 D 13/00 |
| A | | 2 | |
| | --- | | |
| Y | WO-A-8 303 294 (STRÖMBERG) * Page 4, ligne 1 - page 5, ligne 8; page 9, lignes 1-27; page 10, lignes 13-34; page 13, lignes 17-34; page 15, lignes 8-26; figures 1,5 * | 1,3 | |
| A | | 4 | DOMAINES TECHNIQUES RECHERCHES (Int. Cl.4) |
| | --- | | |
| A | EP-A-0 095 427 (CREUSOT-LOIRE) * Revendication 1; figure 1 * | 3 | F 23 C F 22 B B 01 J F 28 D F 28 C |
| | --- | | |
| A | GB-A-2 030 688 (FOSTER WHEELER) * Page 2, lignes 25-37; figure 1 * | 3 | |
| | --- | | |
| A | US-A-3 565 022 (BISHOP) * Colonne 1, ligne 54 - colonne 2, ligne 8; colonne 2, ligne 56 - colonne 3, ligne 4; colonne 3, lignes 18-59; figures * | 3 | |
| | --- | -/- | |

Le présent rapport de recherche a été établi pour toutes les revendications

| Lieu de la recherche LA HAYE | Date d'achèvement de la recherche 18-06-1985 | Examinateur PHOA Y.E. |
|---|---|---|

Office européen
des brevets

**RAPPORT DE RECHERCHE EUROPEENNE**

EP  85  40  0406

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | FR-A-2 209 074   (RHONE PROGIL) | | |
| | --- | | |
| A | DE-A-3 004 864   (STEINMÜLLER) | | |
| | --- | | |
| A | DE-A-2 916 345   (NITSCHKE) | | |
| | ----- | | |
| | | | **DOMAINES TECHNIQUES RECHERCHES (Int. Cl.4)** |

Le présent rapport de recherche a ete établi pour toutes les revendications

| Lieu de la recherche LA HAYE | Date d'achèvement de la recherche 18-06-1985 | Examinateur PHOA Y.E. |
|---|---|---|